(19) Europäisches Patentamt
European Patent Office
Office européen des brevets

(11)  **EP 3 384 260 B1**

(12)  # EUROPÄISCHE PATENTSCHRIFT

(45) Veröffentlichungstag und Bekanntmachung des Hinweises auf die Patenterteilung:
**06.01.2021  Patentblatt 2021/01**

(21) Anmeldenummer: **16801148.4**

(22) Anmeldetag: **04.11.2016**

(51) Int Cl.:
*G01K 7/42* *(2006.01)*      *B21B 37/74* *(2006.01)*
*B22D 11/22* *(2006.01)*      *B22D 11/12* *(2006.01)*
*B22D 27/04* *(2006.01)*      *C21D 1/26* *(2006.01)*
*C21D 11/00* *(2006.01)*

(86) Internationale Anmeldenummer:
**PCT/EP2016/076660**

(87) Internationale Veröffentlichungsnummer:
**WO 2017/092967 (08.06.2017 Gazette 2017/23)**

(54) **VERFAHREN UND SYSTEM ZUM STEUERN UND/ODER REGELN EINER ERWÄRMUNG EINES GEGOSSENEN ODER GEWALZTEN METALLPRODUKTS**

METHOD AND SYSTEM FOR THE OPEN-LOOP AND/OR CLOSED-LOOP CONTROL OF A HEATING OF A CAST OR ROLLED METAL PRODUCT

PROCÉDÉ ET SYSTÈME DE COMMANDE ET/OU DE RÉGLAGE DU CHAUFFAGE D'UN PRODUIT MÉTALLIQUE COULÉ OU LAMINÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2015  DE 102015223767**
**07.01.2016  DE 102016200077**

(43) Veröffentlichungstag der Anmeldung:
**10.10.2018  Patentblatt 2018/41**

(73) Patentinhaber: **SMS Group GmbH**
**40237 Düsseldorf (DE)**

(72) Erfinder:
• **HEIMANN, Thomas**
**58644 Iserlohn (DE)**
• **OUDEHINKEN, Heinz-Jürgen**
**45149 Essen (DE)**
• **HASSEL, Christoph**
**47269 Duisburg (DE)**

(74) Vertreter: **Kross, Ulrich**
**Hemmerich & Kollegen**
**Patentanwälte**
**Hammerstraße 2**
**57072 Siegen (DE)**

(56) Entgegenhaltungen:
**DE-A1-102011 082 158      DE-A1-102012 224 502**
**DE-B3- 10 251 716**

• **F RAMSTORFER ET AL: "Dynacs 3D The new dimension in secondary cooling for slab -casters", ECCC. EUROPEAN CONTINUOUS CASTING CONFERENCE. 7. METEC. METEC LNSTEELCON., 1. Januar 2011 (2011-01-01), Seiten 1-6, XP055301583,**

**Beschreibung**

Die Erfindung betrifft ein Verfahren zum Steuern und/oder Regeln einer Erwärmung eines gegossenen oder gewalzten Metallprodukts aufweisend die Schritte: Ermitteln der Gesamtenthalpie des Metallprodukts aus einer Summe der freien molaren Enthalpien (Gibbs'schen Energien) aller im Metallprodukt momentan vorhandenen Phasen und/oder Phasenanteile; Ermitteln einer Temperaturverteilung innerhalb des Metallprodukts mittels eines dynamischen Temperaturberechnungsmodells unter Verwendung der ermittelten Gesamtenthalpie; und Steuern und/oder Regeln der Erwärmung des Metallprodukts in Abhängigkeit von wenigstens einer Ausgangsgröße des Temperaturberechnungsmodells.

Die Erfindung betrifft des Weiteren ein System zum Erwärmen eines gegossenen oder gewalzten Metallprodukts, aufweisend wenigstens einen Ofen oder wenigstens eine Heizung, in den bzw. die das Metallprodukt zur Erwärmung einführbar ist, und wenigstens eine Steuer- und/oder Regeleinrichtung zum Steuern und/oder Regeln der Erwärmung.

DE 10 2012 224 502 A1 offenbart Walzverfahren zum Walzen eines metallischen Walzguts, bevorzugt in einer Warmbandstraße oder einer Grobblech-Straße, wobei die innerhalb des Walzguts herrschende Temperaturverteilung mittels eines Temperaturberechnungsmodells berechnet wird, wobei die Gesamtenthalpie des durch das Walzgut gebildeten Systems ermittelt wird und als Eingangsgröße in dem Temperaturberechnungsmodell verarbeitet wird, und mindestens eine

Ausgangsgröße des Temperaturberechnungsmodells zur Regelung und/oder Steuerung des Walzverfahrens verwendet wird. Der dynamische Verlauf der Gesamtenthalpie wird ermittelt und als Eingangsgröße in dem Temperaturberechnungsmodell verarbeitet.

Aus DE 10 2011 082 158 A1 ist ein Gießverfahren zur Herstellung eines gegossenen Metallprodukts bekannt. Hierbei wird die im Innern des Metallprodukts herrschende Temperaturverteilung mittels eines auf einer dynamischen Temperatur-Regelung (Dynamic Solidification Control) beruhenden Temperaturberechnungsmodells berechnet. In einem Berechnungsschritt wird die Gesamtenthalpie des durch das Metallprodukt gebildeten Systems ermittelt und als eine Eingangsgröße in dem Temperaturberechnungsmodell verarbeitet. Eine oder mehrere Ausgangsgröße(n) des Temperaturberechnungsmodells wird/werden im Regelungs- und/oder Steuerungsprozess des Gießprozesses verwendet. Die Gesamtenthalpie wird aus der Summe der freien molaren Enthalpien (Gibbs'schen Energien) aller im Metallprodukt aktuell vorhandenen Phasen und/oder Phasenanteile berechnet.

Es ist des Weiteren bekannt, ein gegossenes Metallprodukt, beispielsweise eine Bramme oder ein Metallstrang, nach seinem Gießen zu erwärmen, um die Temperatur des Metallprodukts für eine nachfolgende Bearbeitung, beispielsweise einen Biegevorgang oder Richtvorgang, vorzubereiten und/oder um Gefügestrukturen des Metallprodukts zu beeinflussen, beispielsweise um Ausscheidungen innerhalb des Metallprodukts auflösen zu können. Die Erwärmung eines Metallprodukts erfolgt üblicherweise mittels eines Ofens, der beispielsweise im Rahmen eines kontinuierlichen Stranggießprozesses, insbesondere bei sogenannten CSP(Compact Strip Production)-Anlagen, von den gegossenen Metallprodukten durchlaufen wird.

Bei einer Erwärmung eines Metallprodukts sollte sichergestellt sein, dass die Temperaturen in dem Metallprodukt nicht zu niedrig sind, um eine Auflösung bestimmter Ausscheidungen sicherzustellen. Zudem können bei Unterschreitung einer optimalen Ofeneinlauftemperatur gegebenenfalls gewünschte Gefügeumwandlungen innerhalb des Metallprodukts nicht in der gewünschten Qualität durchgeführt werden oder aber es muss eine entsprechend erhöhte Energie zur Erwärmung des Metallprodukts im Ofen bereitgestellt werden. Zudem sollte bei einer Erwärmung eines Metallprodukts sichergestellt sein, dass die Temperaturen in dem Metallprodukt nicht zu hoch sind, was mit einem zu hohen Auflösungsgrad von Ausscheidungen innerhalb des Metallprodukts einhergehen würde, der zu einem zu großen Kornwachstum führt. Die Kenntnis der Temperaturverteilung innerhalb eines gegossenen Metallprodukts ist daher für den Betrieb eines Ofens von fundamentaler Bedeutung.

Zum Erfassen einer Oberflächentemperatur eines gegossenen Metallprodukts können beispielsweise Pyrometer verwendet werden. Die Temperaturen innerhalb des im Inneren des Metallprodukts können mit einem Pyrometer grundsätzlich nicht gemessen werden, so dass eine Temperaturverteilung innerhalb des Metallprodukts abhängig von den Prozessbedingungen nur mittels eines Temperaturberechnungsmodells ermittelt werden kann.

Die Temperaturverteilung innerhalb des Metallprodukts wird auf Basis der Fourier'schen Wärmegleichung

$$\rho c_p \frac{\partial T}{\partial t} - \frac{\partial}{\partial s}\left(\lambda \frac{\partial T}{\partial s}\right) = Q \qquad (1)$$

ermittelt. Hierbei sind $\rho$ die Dichte, $c_p$ die spezifische Wärmekapazität bei konstantem Druck, T die berechnete absolute Temperatur in Kelvin, t die Zeit, s die Ortskoordinate, $\lambda$ die Wärmeleitzahl und Q die während einer Phasenumwandlung freiwerdende Energie des aus dem Metallprodukt gebildeten Systems. In dem Temperaturberechnungsmodell wird die während der Phasenumwandlung freiwerdende Energie mittels der Gleichung

$$Q = \rho L \frac{\partial f_s}{\partial t} \qquad (2)$$

ermittelt, wobei Q die freiwerdende Energie während der Phasenumwandlung, $\rho$ die Dichte, L die freiwerdende Umwandlungswärme, t die Zeit und $f_s$ den Phasenumwandlungsgrad des Systems sind. Aus der Berechnung der spezifischen Wärmekapazität folgt die Gesamtenthalpie H entsprechend der Gleichung

$$H = \int c_p \partial T . \qquad (3)$$

Als notwendige Eingangsgrößen der Wärmegleichung sind die Wärmeleitung, die Dichte und die Gesamtenthalpie besonders wichtig, da diese Größen das Temperaturergebnis maßgeblich beeinflussen. Die Wärmeleitfähigkeit bzw. Wärmeleitzahl und die Dichte sind Funktionen der Temperatur, der chemischen Zusammensetzung des Metallprodukts und des jeweiligen Phasenanteils und können experimentell genau ermittelt werden. Die Gesamtenthalpie ist jedoch nicht messbar und für bestimmte chemische Zusammensetzungen des Metallprodukts, insbesondere Eisen- oder Stahllegierungen, nur ungenau mit Näherungsgleichungen beschreibbar. Daraus folgt, dass die anschließende numerische Lösung der Wärmegleichung zu ungenauen Temperaturergebnissen führt. Bei Änderungen der chemischen Zusammensetzungen müssen zudem neue Messungen der Wärmeleitfähigkeit und der Dichte für den jeweiligen Werkstoff neu durchgeführt werden. Eine weitere Möglichkeit zur Bestimmung der Wärmeleitfähigkeit und der Dichte besteht in der Ermittlung von Regressionsgleichungen, die den jeweiligen Werkstoff beschreiben. Da sich die Werte für die Wärmeleitfähigkeit und die Dichte an Phasengrenzen stark ändern, liefern alle Regressionsgleichungen ohne Kenntnis der Phasengrenzen ungenaue Werte.

Zum Beispiel gibt Schwerdtfeger als Herausgeber in seinem Buch "Metallurgie des Stranggießens", Verlag Stahleisen mbH, 1992 empirische Regressionsgleichungen für die Enthalpie von unlegierten Kohlenstoffstählen an, die innerhalb bestimmter, enger Analysegrenzen mit brauchbarer Genauigkeit verwendet werden können. Diese Regressionsgleichungen sind allerdings Näherungsgleichungen und haben keine physikalische Grundlage. Richter in "Die wichtigsten physikalischen Eigenschaften von 52 Eisenwerkstoffen", Verlag Stahleisen Düsseldorf, 1973 gibt für Reineisen eine genaue thermodynamische Beziehung für die Enthalpie der einzelnen Phasen an. Reineisen hat jedoch keine technische Bedeutung. Für Stahlwerkstoffe liegt für die Gesamtenthalpie eines Systems keine exakte thermodynamische Angabe vor.

Dies führt dazu, dass die numerische Lösung der Fourier'schen Wärmegleichung ungenaue Temperaturergebnisse hervorbringt. Der Nachteil des Standes der Technik besteht also darin, dass die Lösung der Fourier'schen Wärmegleichung mit numerischen Verfahren durchgeführt wird, die in Abhängigkeit von der Qualität der Eingangsdaten ein Temperaturergebnis, das heißt eine Temperaturverteilung innerhalb des Metallprodukts liefern, so dass das erhaltene Ergebnis bei fehlerhaften oder ungenauen Enthalpie-Eingangsdaten zu Abweichungen zwischen der berechneten Temperaturverteilung oder Temperatur und der jeweils real existierenden, gegebenenfalls durch Messungen belegten, Temperaturverteilung innerhalb des Metallprodukts führt.

Eine Aufgabe der Erfindung ist es, die Erwärmung eines gegossenen oder gewalzten Metallprodukts hinsichtlich der Produktqualität und des Energieverbrauchs zu optimieren.

Diese Aufgabe wird durch die unabhängigen Patentansprüche gelöst. Vorteilhafte Ausgestaltungen sind insbesondere in den abhängigen Patentansprüchen angegeben, die jeweils für sich genommen oder in verschiedener Kombination miteinander einen Aspekt der Erfindung darstellen können.

Ein erfindungsgemäßes Verfahren zum Steuern und/oder Regeln einer Erwärmung eines gegossenen oder gewalzten Metallprodukts umfasst die Schritte:

- Ermitteln der Gesamtenthalpie des Metallprodukts aus einer Summe der freien molaren Enthalpien (Gibbs'schen Energien) aller im Metallprodukt momentan vorhandenen Phasen und/oder Phasenanteile;
- Ermitteln einer Temperaturverteilung innerhalb des Metallprodukts mittels eines dynamischen Temperaturberechnungsmodells unter Verwendung der ermittelten Gesamtenthalpie; und
- Steuern und/oder Regeln der Erwärmung des Metallprodukts in Abhängigkeit von wenigstens einer Ausgangsgröße des Temperaturberechnungsmodells,

wobei zu jeder Phase eine Dichte ermittelt wird und Phasengrenzen zwischen den Phasen ermittelt werden, wobei eine Dichteverteilung des Metallprodukts auf Basis der ermittelten Dichten der Phasen und der ermittelten Phasengrenzen ermittelt wird und die Dichteverteilung bei der Ermittlung der Temperaturverteilung verwendet wird.

Erfindungsgemäß wird bei der Steuerung und/oder Regelung der Erwärmung eines gegossenen oder gewalzten Metallprodukts die Temperaturverteilung innerhalb des Metallprodukts berücksichtigt, die sich aus der Gesamtenthalpie des Metallprodukts bzw. des daraus gebildeten Systems sehr genau ermitteln lässt. Dies macht eine bessere Temperaturvorhersage und Temperaturkontrolle sowie eine genauere Angabe der Austrittstemperatur aus dem Ofen oder einer Heizung möglich, was mit einer Energieeinsparung und einer verbesserten Einstellung der zur Auflösung von Ausscheidungen nötigen Temperatur einhergeht.

Die Gesamtenthalpie des Metallprodukts bzw. daraus gebildeten Systems kann mittels des Temperaturberechnungsmodells und der Gibbs'schen Energie bei konstantem Druck nach der Gleichung

$$H = G - T\left(\frac{\partial G}{\partial T}\right)_p \qquad (4)$$

ermittelt werden, wobei H die molare Enthalpie des Systems, G die Gibbs'sche Energie des Systems, T die absolute Temperatur in Kelvin und p der Druck des Systems sind. Für eine Phasenmischung kann die Gibbs'sche Energie des Systems über die Gibbs'schen Energien der Phasen bzw. Reinphasen sowie deren Phasenanteilen ermittelt werden. Beispielsweise gilt für Stahl:

$$G = f^l G^l + f^\gamma G^\gamma + f^{p\alpha} G^{p\alpha} + f^{e\alpha} G^{e\alpha} + f^{ec} G^{ec}, \qquad (5)$$

wobei G die Gibbs'sche Energie des Metallprodukts bzw. Systems, $f^\phi$ der Gibbs'sche Energieanteil, auch Phasenanteil genannt, der Phase $\phi$ am System und $G^\phi$ die Gibbs'sche Energie der Phase $\phi$ sind. Für die Austenitphase, Ferritphase und Flüssigphase kann die Gibbs'sche Energie aus der Gleichung

$$G^\Phi = \sum_{i=1}^{n} x_i^\Phi G_i^\Phi + RT \sum_{i=1}^{n} x_i \ln x_i + {}^E G^\Phi + {}^{magn} G^\Phi \qquad (6)$$

ermittelt werden, wobei $G^\Phi$ die Gibbs'sche Energie einer jeweiligen Phase $\Phi$, $x_i^\Phi$ der Molenbruch der i-ten Komponente der jeweiligen Phase $\Phi$, $G_i^\Phi$ die Gibbs'sche Energie der i-ten Komponente der jeweiligen Phase $\Phi$, R die allgemeine Gaskonstante, T die absolute Temperatur in Kelvin, ${}^E G^\Phi$ die Gibbs'sche Energie für eine nicht ideale Mischung und ${}^{magn} G^\Phi$ die magnetische Energie des Systems sind. Die Gibbs'sche Energie für eine nicht ideale Mischung kann mit der Gleichung

$$^E G^\Phi = \sum x_i x_j \, {}^a L_{i,j}^\Phi \left(x_i - x_j\right)^a + \sum x_i x_j x_k L_{i,j,k}^\Phi \qquad (7)$$

ermittelt werden, wobei ${}^E G^\Phi$ die Gibbs'sche Energie für eine nicht ideale Mischung, $x_i$ der Molenbruch der i-ten Komponente, $x_j$ der Molenbruch der j-ten Komponente, $x_k$ der Molenbruch der k-ten Komponente, a ein Korrekturterm, ${}^a L_{i,j}^\Phi$ Wechselwirkungsparameter verschiedener Ordnung und ${}^a L_{i,j,k}^\Phi$ und ${}^a L_{i,j}^\Phi$ Wechselwirkungsparameter verschiedener Ordnung des Gesamtsystems sind. Der Anteil der magnetischen Energie kann mit der Gleichung

$$^{magn} G^\Phi = RT \ln(1 + \beta) f(\tau) \qquad (8)$$

ermittelt werden, wobei ${}^{magn} G^\Phi$ die magnetische Energie des Systems, R die allgemeine Gaskonstante, T die absolute Temperatur in Kelvin, $\beta$ das magnetische Moment und $f(\tau)$ der Anteil am Gesamtsystem in Abhängigkeit von der normierten Curie-Temperatur $\tau$ des Gesamtsystems sind. In der obigen Gleichung (5) für die Gibbs'sche Energie einer Phasenmischung entsprechen die einzelnen Terme der Einzelelement-Energie, einem Beitrag für eine ideale Mischung sowie einem Beitrag für eine nicht ideale Mischung und der magnetischen Energie des Systems. Bei bekannter Gibbs'scher Energie des Systems kann daraus die molare spezifische Wärmekapazität mit der Gleichung

$$c_p = -T\left(\frac{\partial^2 G}{\partial T^2}\right)_p \qquad (9)$$

ermittelt werden, wobei $c_p$ die molare spezifische Wärmekapazität des Systems, T die absolute Temperatur in Kelvin und G die Gibbs'sche Energie des Systems sind. Die Parameter der Terme der obigen Gleichungen (6) - (8) sind in einer Thermocalc- und MatCalc-Datenbank aufgeführt und können zur Ermittlung der Gibbs-Energien einer Stahlzusammensetzung verwendet werden. Mit Hilfe einer mathematischen Ableitung ergibt sich daraus die Gesamtenthalpie der Stahlzusammensetzung.

Das Metallprodukt wird vorzugsweise durch Gießen einer Stahl- oder Eisenlegierung hergestellt. Das Metallprodukt kann als Bramme oder Strang ausgebildet sein.

Die Erwärmung des Metallprodukts kann beispielsweise in Form einer Vor- oder Zwischenerwärmung, insbesondere Wiedererwärmung, gegeben sein.

Die Phasengrenzen können mit Hilfe der Gibbs'schen Energien bestimmt werden. Die Dichteverteilung des Metallprodukts kann mit Hilfe der Phasengrenzen als Funktion der Temperatur und der Phasenanteile ermittelt werden. Die genaue Kenntnis der Dichteverteilung des Metallprodukts macht eine genauere Ermittlung der Temperaturverteilung des Metallprodukts möglich.

Nach einer vorteilhaften Ausgestaltung wird für jede Phase eine Wärmeleitfähigkeit ermittelt und werden Phasengrenzen zwischen den Phasen ermittelt, wobei ein Verlauf der Wärmeleitfähigkeit des Metallprodukts auf Basis der ermittelten Wärmeleitfähigkeiten der Phasen und der ermittelten Phasengrenzen ermittelt wird. Die Phasengrenzen können mit Hilfe der Gibbs'schen Energien bestimmt werden. Der Verlauf der Wärmeleitfähigkeit des Metallprodukts kann mit Hilfe der Phasengrenzen als Funktion der Temperatur und der Phasenanteile ermittelt werden. Die genaue Kenntnis des Verlaufs der Wärmeleitfähigkeit des Metallprodukts macht eine genauere Ermittlung der Temperaturverteilung des Metallprodukts möglich. In die Fourier'sche Wärmegleichung (1) geht neben der spezifischen Wärmekapazität $c_p$, die aus der Enthalpie und damit aus den Phasenanteilen berechnet werden kann, auch die temperaturabhängige Dichte $\rho$ und die temperaturabhängige Wärmeleitfähigkeit $\lambda$ ein. Die Kenntnis der Wärmeleitung ist bei der Erwärmung des Metallprodukts extrem wichtig, da die Temperatur des Metallprodukts nur oberflächlich gemessen werden kann. Um aber beispielsweise alle Ausscheidungen, beispielsweise Carbonnitride, auflösen zu können, muss über den gesamten Querschnitt, insbesondere auch in einem kälteren "Cold-Spot"-Bereich, des Metallprodukts die lokale Temperatur des Metallprodukts über einem Grenzwert liegen. Die inneren lokalen Temperaturen des Metallprodukts können aber nicht gemessen, sondern lediglich berechnet werden. Hierzu ist eine möglichst exakte Kenntnis der temperaturabhängigen Wärmeleitung Voraussetzung. Die Wärmeleitfähigkeit $\lambda$ kann experimentell ermittelt werden. Es können hierbei Regressionsgleichungen zur Ermittlung der Wärmeleitung in einer Reinphase, also $\lambda_\gamma$ und $\lambda_\alpha$, eingesetzt werden. Aus den berechneten Phasengrenzen können die Umwandlungstemperaturen bestimmt werden und daraus der Verlauf der Wärmeleitung: $T>T_{\gamma\alpha}$ für $\lambda=\lambda_\gamma$, $T<T_{ce}$ für $\lambda=\lambda_\alpha$ und $T_{ce}<T<T_{\gamma\alpha}$ für $\lambda=\lambda_\gamma P_\gamma+\lambda_\alpha P_\alpha$ mit den berechneten Phasenanteilen $P_\gamma$ und $P_\alpha$.

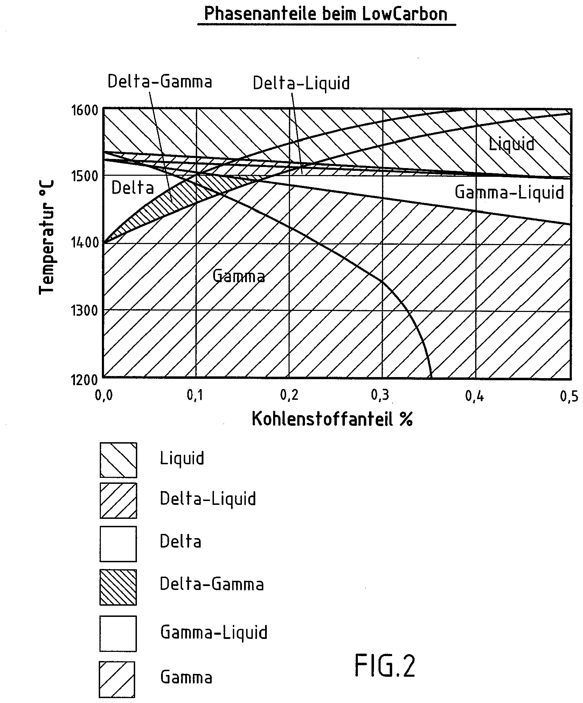

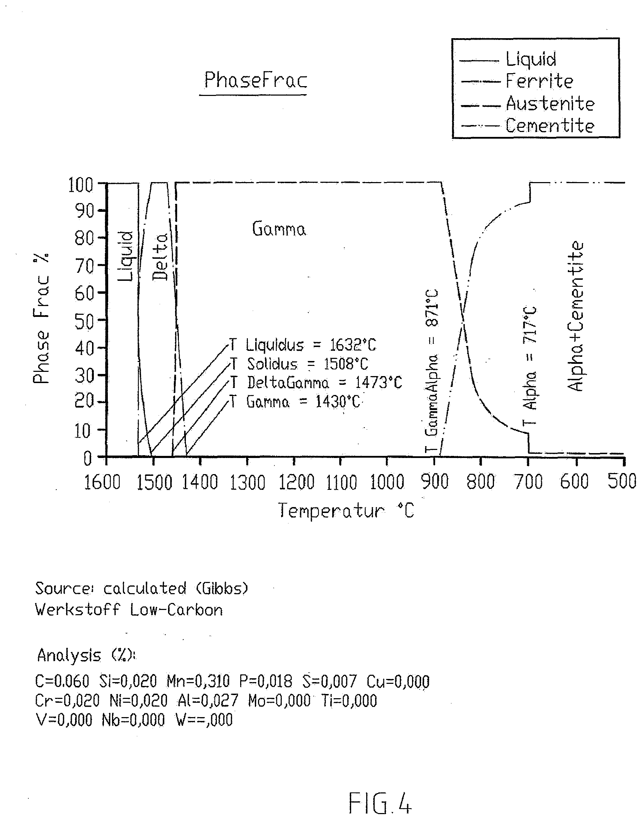

Eine weitere vorteilhafte Ausgestaltung sieht vor, dass auf Basis der Phasengrenzen Umwandlungstemperaturen ermittelt werden, bei denen jeweils eine Umwandlung von einer Phase in eine andere Phase eingeleitet wird. Insbesondere werden die Umwandlungstemperaturen aus dem Minimum der Gibbs'schen Energien ermittelt. In der Natur wird bevorzugt die Phase angenommen, in der die Energie minimal wird ("Prinzip des Energieminimums"). So kann aus den Energien der Rheinphasen die Phase mit der geringsten Gibbs'schen Energie bestimmt werden. Zudem können durch Tangentenbildung auch Zwei-Phasen-Gebiete bestimmt werden. Dies ist in den Figuren 2 und 4 angedeutet.

Gemäß einer weiteren vorteilhaften Ausgestaltung wird auf Basis einer vorgegebenen Zieltemperaturverteilung innerhalb des Metallprodukts, einer Oberflächentemperatur des Metallprodukts, einer chemischen Zusammensetzung des Metallprodukts und wenigstens einer Eigenschaft eines zur Erwärmung eingesetzten Ofens oder einer hierzu eingesetzten Heizung eine zeitliche Länge der Erwärmung ermittelt. Die Oberflächentemperatur des Metallprodukts kann vor und/oder während der Erwärmung gemessen werden. Die chemische Zusammensetzung des Metallprodukts kann aus einer vorausgehenden chemischen Analyse des Metallprodukts oder einer Materialverfolgung stammen. Die Zieltemperaturverteilung kann von dem Temperaturberechnungsmodell ermittelt und vorgegeben werden. Es lässt sich also die sogenannte Aufheizzeit zum Erreichen einer minimalen Temperaturgrenze und eines ausreichend ausgeglichenen Temperaturprofils des Metallprodukts genau ermitteln. Auch lässt sich eine Glühzeit ermitteln, die erforderlich ist, um Ausscheidungen wie gewünscht aufzulösen. Aus der ermittelten Temperaturverteilung des Metallprodukts und der vorgegebenen Ofentemperatur bzw. Heizungstemperatur kann so die zeitliche Länge der Erwärmung ermittelt werden, bis das Metallprodukt an allen Querschnittspositionen eine vorgegebene Solltemperatur erreicht hat bzw. eine gewünschte Auflösung von Ausscheidungen erfolgt ist.

Nach einer weiteren vorteilhaften Ausgestaltung wird anhand einer vorgegebenen Zieltemperaturverteilung des Metallprodukts, einer Oberflächentemperatur des Metallprodukts, einer chemischen Zusammensetzung des Metallprodukts, wenigstens einer Eigenschaft eines zur Erwärmung eingesetzten Ofens oder einer hierzu eingesetzten Heizung und einerseits einer vorgegebenen Transportgeschwindigkeit des Metallprodukts oder andererseits einer vorgegebenen Liegezeit des Metallprodukts eine für die Erwärmung erforderliche Solltemperatur, mit der das Metallprodukt beaufschlagt wird, ermittelt. Die exakte Berechnung der Temperatur der Erwärmung ermöglicht eine Energieeinsparung gegenüber herkömmlichen Erwärmungen, bei denen aufgrund einer weniger exakt ermittelten Temperaturverteilung innerhalb des Metallprodukts gegebenenfalls zu hohe Ofentemperaturen bzw. Heizungstemperaturen verwendet werden können. Auf der anderen Seite kann durch die genauere Temperatursteuerung und/oder Temperaturregelung sichergestellt werden, dass die Temperaturbeaufschlagung des Metallprodukts ausreicht, um eine gewünschte Auflösung von Ausscheidungen zu erreichen.

Ein erfindungsgemäßes System zum Erwärmen eines gegossenen oder gewalzten Metallprodukts umfasst wenigstens einen Ofen oder wenigstens eine Heizung, in den bzw. die das Metallprodukt zur Erwärmung einführbar ist, und wenigstens eine Steuer- und/oder Regeleinrichtung zum Steuern und/oder Regeln der Erwärmung, wobei die Steuer- und/oder Regeleinrichtung zur Durchführung des Verfahrens nach einer der vorgenannten Ausgestaltungen oder einer beliebigen Kombination derselben eingerichtet ist.

Mit dem System sind die oben mit Bezug auf das Verfahren genannten Vorteile entsprechend verbunden. Der Ofen kann beispielsweise ein Ofen, insbesondere Tunnelofen, einer CSP-Anlage, einer Stranggießanlage, einer Warmbandstraße, einer Grobblech-straße, einer Rundanlage, Profilanlage oder Bandanlage sein. Der Ofen bzw. Heizung kann an allen Stellen eines Produktionsprozesses angeordnet sein, an denen Werkstoffe erwärmt werden sollen.

Im Folgenden wird die Erfindung unter Bezugnahme auf die anliegenden Figuren exemplarisch erläutert, wobei die nachfolgend erläuterten Merkmale sowohl jeweils für sich genommen als auch in unterschiedlicher Kombination miteinander einen Aspekt der Erfindung darstellen können. Es zeigen:

Figur 1: eine Darstellung der Gibbs'schen Energie für Reineisen;

Figur 2: ein (konstruiertes) Phasendiagramm mit Gibbs'schen Energien;

Figur 3: einen Verlauf der Gesamtenthalpie nach Gibbs für einen kohlenstoffarmen Stahl (LC);

Figur 4: einen Verlauf der Phasenanteile nach Gibbs für einen kohlenstoffarmen Stahl (LC);

Figur 5: einen Verlauf der Dichte für einen kohlenstoffarmen Stahl (LC) mit den berechneten Phasenanteilen;

Figur 6: einen Verlauf der Wärmeleitung für einen kohlenstoffarmen Stahl (LC) mit den berechneten Phasenanteilen;

Figur 7: einen Verlauf der Phasenanteile nach Gibbs für einen hochlegierten Stahl (austenitischer Edelstahl);

Figur 8: einen Verlauf der Dichte für einen hochlegierten Stahl (austenitischer Edelstahl);

Figur 9: einen Verlauf der Wärmeleitung für einen hochlegierten Stahl (austenitischer Edelstahl);

Figur 10: eine schematische Darstellung eines Ausführungsbeispiels für ein erfindungsgemäßes System;

Figur 11: eine schematische Darstellung eines Anwendungsbeispiels für die Erfindung;

Figur 12: eine schematische Darstellung eines Ausführungsbeispiels für ein erfindungsgemäßes System; und

Figur 13: einen Verlauf der Temperatur eines Metallprodukts in einem Ofen.

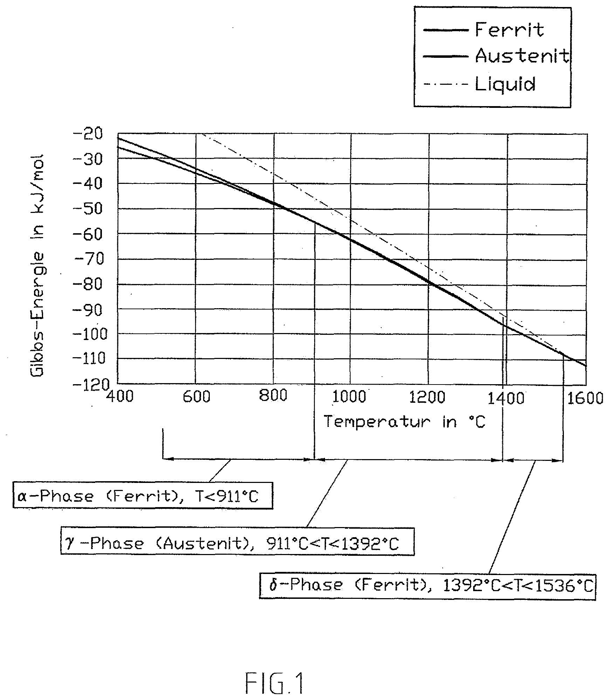

Figur 1 zeigt eine Darstellung der Gibbs'schen Energie für Reineisen. Man kann erkennen, dass die einzelnen Phasen Ferrit, Austenit und die Flüssigphase für einen bestimmten charakteristischen Temperaturbereich ein Minimum einnehmen, bei dem diese Phasen stabil sind.

Figur 2 zeigt die Phasengrenzen einer Fe-C-Legierung mit 0,02% Si, 0,310% Mn, 0,018 % P, 0,007% S, 0,02% Cr, 0,02% Ni, 0,027% Al und variablem C-Gehalt. Mit der Formulierung der Gibbs'schen Energie ist es möglich, ein solches Phasendiagramm mit einer beliebigen chemischen Zusammensetzung zu konstruieren und die stabilen Phasenanteile darzustellen.

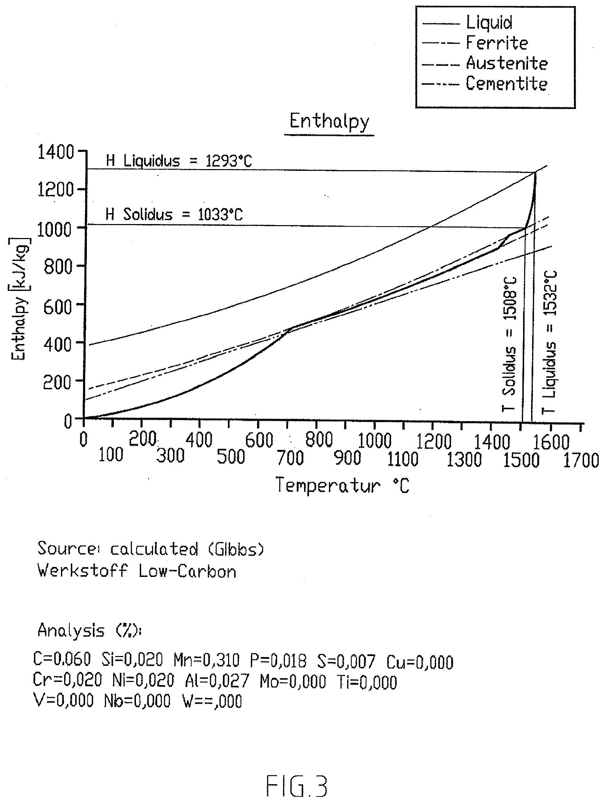

Figur 3 zeigt einen Verlauf der Gesamtenthalpie nach Gibbs für einen kohlenstoffarmen Stahl (LC) als Funktion der Temperatur. Außerdem sind im Bild die Solidus- und Liquidustemperatur dargestellt.

Figur 4 zeigt einen Verlauf der Phasenanteile nach Gibbs für einen kohlenstoffarmen Stahl (LC) als Funktion der Temperatur. Man erkennt in Figur 4 die Bereiche der Schmelze, der Delta-, Gamma-, Alpha- und Zementit-Phase.

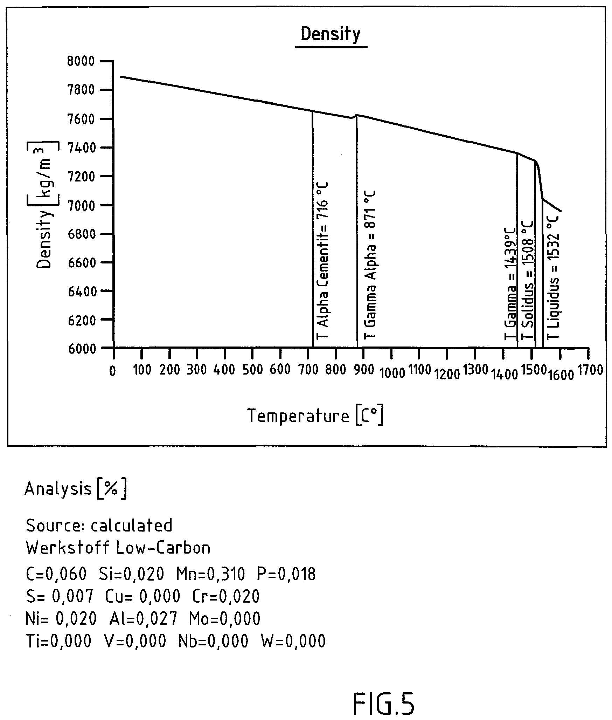

Figur 5 zeigt einen Verlauf der Dichte für einen kohlenstoffarmen Stahl (LC) mit den berechneten Phasenanteilen als Funktion der Temperatur und der berechneten Phasengrenzen. Die Dichte jeder einzelnen Phase wird über separate Regressionsgleichungen bestimmt. Zur Bestimmung des gesamten Dichteverlaufs werden die Phasengrenzen benötigt.

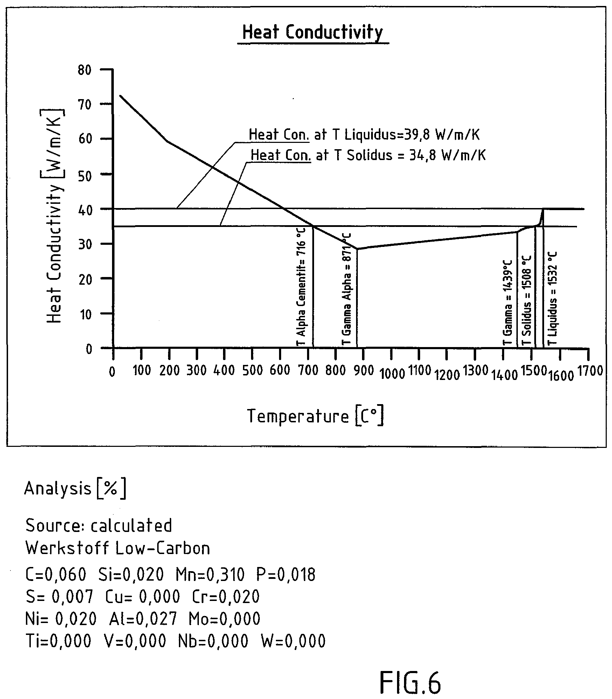

Figur 6 zeigt einen Verlauf der Wärmeleitung für einen kohlenstoffarmen Stahl (LC) mit den berechneten Phasenanteilen. Hier wird wie bei der Berechnung der Dichte die Wärmeleitzahl für jede Phase aus Regressionsgleichungen berechnet. Zur Bestimmung des Gesamtverlaufs der Wärmeleitung werden wiederum die Phasenanteile benötigt.

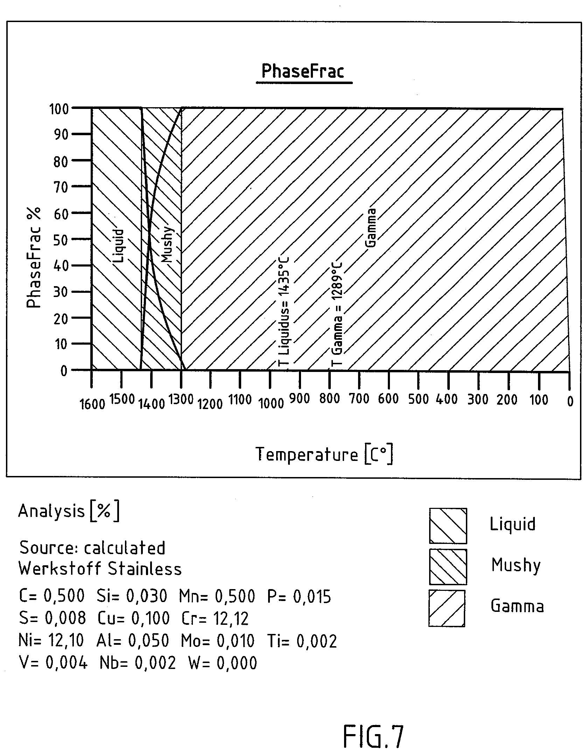

Figur 7 zeigt einen Verlauf der Phasenanteile nach Gibbs für einen hochlegierten Stahl (austenitischer Edelstahl) mit etwa 12 % Chrom und etwa 12 % Nickel. Der austenitische Stahl wandelt nicht mehr von Gamma nach Alpha um.

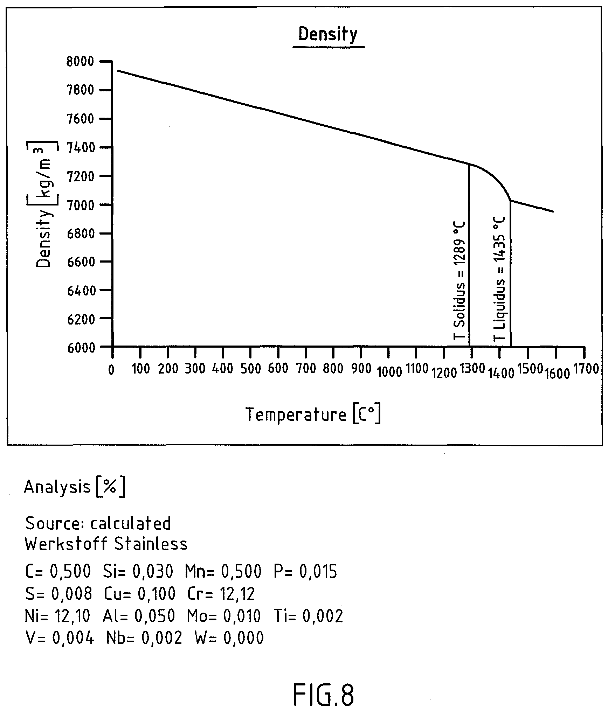

Figur 8 zeigt einen Verlauf der Dichte für einen hochlegierten Stahl (austenitischer Edelstahl). Der Abfall der Dichte bei der Phasenumwandlung von Gamma nach Alpha (sonst bei etwa 800 °C) entfällt.

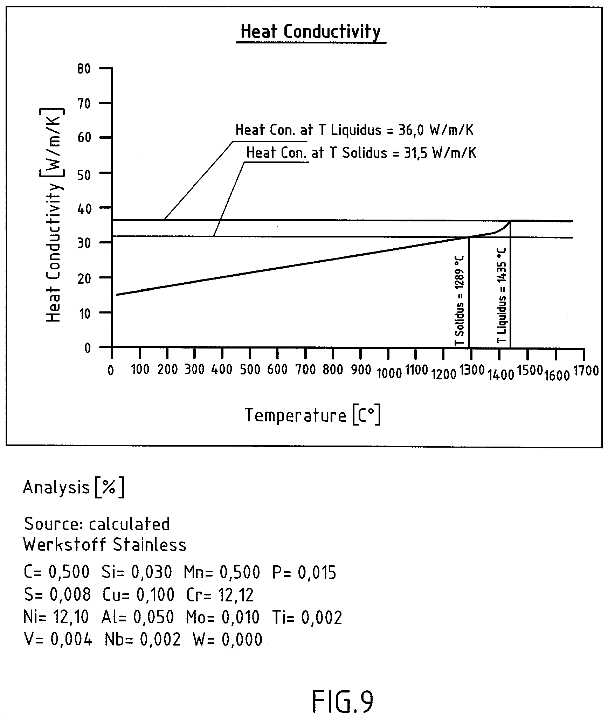

Figur 9 zeigt einen Verlauf der Wärmeleitung für einen hochlegierten Stahl (austenitischer Edelstahl). Da die Alpha-Phase nicht auftritt, fällt die Wärmeleitzahl bis auf etwa 14 W/(mK) bei 25 °C ab.

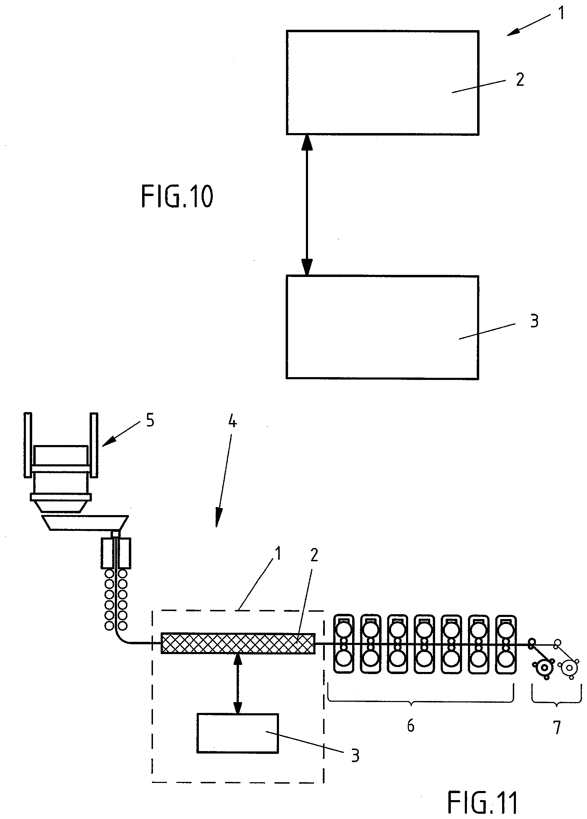

Figur 10 zeigt eine schematische Darstellung eines Ausführungsbeispiels für ein erfindungsgemäßes System 1 zum Erwärmen eines gegossenen oder gewalzten, nicht gezeigten Metallprodukts. Das System 1 umfasst einen Ofen 2, in den das Metallprodukt zur Erwärmung einführbar ist. Des Weiteren umfasst das System 1 eine Steuer- und/oder Regeleinrichtung 3 zum Steuern und/oder Regeln der Erwärmung.

Die Steuer- und/oder Regeleinrichtung 3 ist zur Durchführung eines Verfahrens zum Steuern und/oder Regeln einer Erwärmung eines gegossenen oder gewalzten Metallprodukts eingerichtet, aufweisend die Schritte:

- Ermitteln der Gesamtenthalpie des Metallprodukts aus einer Summe der freien molaren Enthalpien (Gibbs'schen Energien) aller im Metallprodukt momentan vorhandenen Phasen und/oder Phasenanteile;
- Ermitteln einer Temperaturverteilung innerhalb des Metallprodukts mittels eines dynamischen Temperaturberechnungsmodells unter Verwendung der ermittelten Gesamtenthalpie; und
- Steuern und/oder Regeln der Erwärmung des Metallprodukts in Abhängigkeit von wenigstens einer Ausgangsgröße des Temperaturberechnungsmodells.

Des Weiteren ist die Steuer- und/oder Regeleinrichtung 3 eingerichtet, zu jeder Phase eine Dichte, Phasengrenzen zwischen den Phasen und eine Dichteverteilung des Metallprodukts auf Basis der ermittelten Dichten der Phasen und der ermittelten Phasengrenzen zu ermitteln, wobei die Dichteverteilung bei der Ermittlung der Temperaturverteilung verwendet wird. Zudem kann die Steuer- und/oder Regeleinrichtung 3 eingerichtet sein, für jede Phase eine Wärmeleitfähigkeit, Phasengrenzen zwischen den Phasen und einen Verlauf der Wärmeleitfähigkeit des Metallprodukts auf Basis der ermittelten Wärmeleitfähigkeiten der Phasen und der ermittelten Phasengrenzen zu ermitteln. Auch kann die Steuer- und/oder Regeleinrichtung 3 eingerichtet sein, auf Basis der Phasengrenzen Umwandlungstemperaturen zu ermitteln, bei denen jeweils eine Umwandlung von einer Phase in eine andere Phase eingeleitet wird.

Die Steuer- und/oder Regeleinrichtung 3 kann eingerichtet sein, auf Basis einer vorgegebenen Zieltemperaturverteilung innerhalb des Metallprodukts, einer Oberflächentemperatur des Metallprodukts, einer chemischen Zusammensetzung des Metallprodukts und wenigstens einer Eigenschaft des zur Erwärmung eingesetzten Ofens 2 eine zeitliche Länge der Erwärmung zu ermitteln. Zudem kann die Steuer- und/oder Regeleinrichtung 3 eingerichtet sein, anhand einer vorgegebenen Zieltemperaturverteilung des Metallprodukts, der Oberflächentemperatur des Metallprodukts, der chemischen Zusammensetzung des Metallprodukts, wenigstens einer Eigenschaft des zur Erwärmung eingesetzten Ofens 2 und einerseits einer vorgegebenen Transportgeschwindigkeit des Metallprodukts oder andererseits einer vorgegebenen Liegezeit des Metallprodukts eine für die Erwärmung erforderliche Soll-Temperatur, mit der das Metallprodukt beaufschlagt wird, zu ermitteln.

Die Steuer- und/oder Regeleinrichtung 3 kann eingerichtet sein, zu ermitteln, ob die lokalen Temperaturen des Metallprodukts an allen Berechnungspositionen größer als eine Ausscheidungstemperatur sind. Trifft dies zu, kann das Metallprodukt aus dem Ofen 2 ausgefahren werden. Trifft dies hingegen nicht zu, muss das Metallprodukt zum weiteren Temperaturausgleich in dem Ofen 2 verweilen, bis mittels der Temperaturberechnungsmodells festgestellt wird, dass die lokalen Temperaturen des Metallprodukts an allen Berechnungspositionen größer als eine Ausscheidungstemperatur sind.

Figur 11 zeigt eine schematische Darstellung eines Anwendungsbeispiels für die Erfindung. Es ist eine CSP-Anlage 4 gezeigt, die eine Gießanlage 5, einen Tunnelofen 2, ein Warmwalzwerk 6 und eine Haspeleinrichtung 7 aufweist. Der Tunnelofen 2 ist Teil eines erfindungsgemäßen Systems 1, wie es mit Bezug auf Figur 10 beschrieben ist.

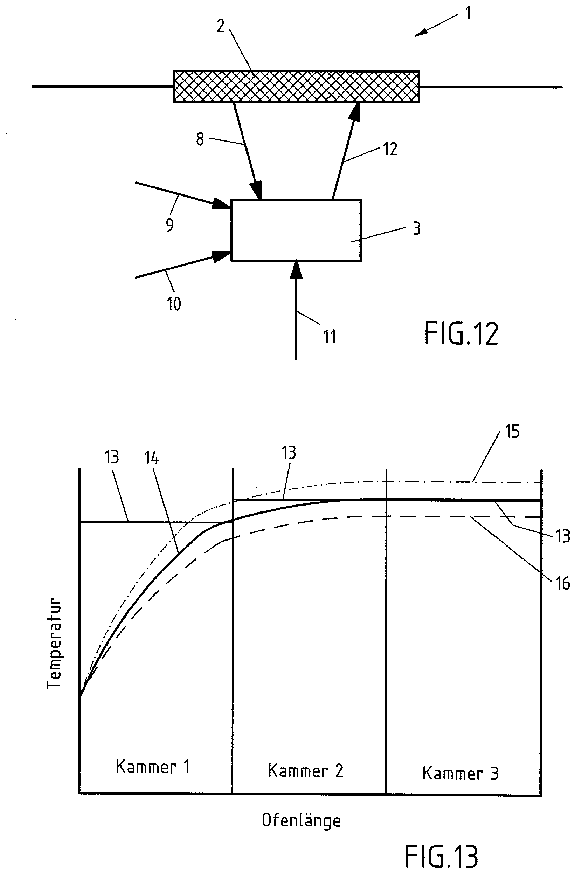

Figur 12 zeigt eine schematische Darstellung eines Ausführungsbeispiels für ein erfindungsgemäßes System 1. Das System 1 kann grundsätzlich entsprechend Figur 10 ausgebildet sein, weshalb hier zur Vermeidung von Wiederholungen auf die obige Beschreibung zu Figur 10 verwiesen wird. Der Ofen 2 ist als Tunnelofen ausgebildet. Die Steuer- und/oder Regeleinrichtung 3 enthält ein Ofenmodell mit integriertem Temperaturberechnungsmodell. Der Steuer- und/oder Regeleinrichtung 3 werden gemäß dem Pfeil 8 Daten zu den momentanen und maximalen Brennerleistungen des Ofens 2 zugeführt. Gemäß dem Pfeil 9 werden der Steuer- und/oder Regeleinrichtung 3 vom Castermodell und Messwerten herrührende Temperaturen an jeder Brammenposition zugeführt. Gemäß dem Pfeil 10 werden der Steuer- und/oder Regeleinrichtung 3 aus der Materialverfolgung herrührende Analysedaten bezüglich der chemischen Zusammensetzung des Metallprodukts zugeführt. Gemäß dem Pfeil 11 werden der Steuer- und/oder Regeleinrichtung 3 aus einer Materialberechnung und/oder aus Erfahrungswerten stammende Ausscheidungstemperaturen und Glühzeiten zugeführt. Gemäß dem Pfeil 12 werden von der Steuer- und/oder Regeleinrichtung 3 berechnete, erforderliche Brennerleistungen für jede Ofenkammer des Ofens 2 zum Erreichen einer optimalen Glühtemperatur und einer optimalen Glühzeit bzw. entsprechende Daten zugeführt.

Figur 13 zeigt einen Verlauf der Temperatur eines Metallprodukts in einem Ofen. Es ist zum einen die Solltemperatur 13 für jede der drei Kammern des Ofens eingezeichnet. Zudem ist der gemäß dem erfindungsgemäßen Verfahren ermittelte Temperaturverlauf 14 für die Erwärmung dargestellt. Des Weiteren ist ein herkömmlich berechneter, falscher Temperaturverlauf 15 dargestellt, bei dem eine zu hohe Temperatur berechnet worden ist, was mit einem unnötigen Energieverlust einhergeht. Des Weiteren ist ein herkömmlich berechneter, falscher Temperaturverlauf 16 dargestellt, bei dem eine zu niedrige Temperatur berechnet worden ist, wodurch Ausscheidungen nicht wie gewünscht aufgelöst werden.

Bezugszeichenliste

1 System
2 Ofen
3 Steuer- und/oder Regeleinrichtung
4 CSP-Anlage
5 Gießanlage
6 Warmwalzwerk
7 Haspeleinrichtung
8 Pfeil (Datenfluss)
9 Pfeil (Datenfluss)
10 Pfeil (Datenfluss)
11 Pfeil (Datenfluss)
12 Pfeil (Datenfluss)
13 Solltemperatur
14 Temperaturverlauf
15 falscher Temperaturverlauf
16 falscher Temperaturverlauf

**Patentansprüche**

1. Verfahren zum Steuern und/oder Regeln einer Erwärmung eines gegossenen oder gewalzten Metallprodukts, aufweisend die Schritte:

   - Ermitteln der Gesamtenthalpie des Metallprodukts aus einer Summe der freien molaren Enthalpien, d.h. Gibbs'schen Energien, aller im Metallprodukt momentan vorhandenen Phasen und/oder Phasenanteile;
   - Ermitteln einer Temperaturverteilung innerhalb des Metallprodukts mittels eines dynamischen Temperaturberechnungsmodells unter Verwendung der ermittelten Gesamtenthalpie; und
   - Steuern und/oder Regeln der Erwärmung des Metallprodukts in Abhängigkeit von wenigstens einer Ausgangsgröße des Temperaturberechnungsmodells,
   **dadurch gekennzeichnet, dass**
   zu jeder Phase eine Dichte ermittelt wird und Phasengrenzen zwischen den Phasen ermittelt werden, wobei eine Dichteverteilung des Metallprodukts auf Basis der ermittelten Dichten der Phasen und der ermittelten Phasengrenzen ermittelt wird und die Dichteverteilung bei der Ermittlung der Temperaturverteilung verwendet wird.

2. Verfahren nach Anspruch 1, **dadurch gekennzeichnet, dass** für jede Phase eine Wärmeleitfähigkeit ermittelt wird und dass Phasengrenzen zwischen den Phasen ermittelt werden, wobei ein Verlauf der Wärmeleitfähigkeit des Metallprodukts auf Basis der ermittelten Wärmeleitfähigkeiten der Phasen und der ermittelten Phasengrenzen ermittelt wird.

3. Verfahren nach Anspruch 1 oder 2, **dadurch gekennzeichnet, dass** auf Basis der Phasengrenzen Umwandlungstemperaturen ermittelt werden, bei denen jeweils eine Umwandlung von einer Phase in eine andere Phase eingeleitet wird.

4. Verfahren nach einem der Ansprüche 1 bis 3, **dadurch gekennzeichnet, dass** auf Basis einer vorgegebenen Zieltemperaturverteilung innerhalb des Metallprodukts, einer Oberflächentemperatur des Metallprodukts, einer chemischen Zusammensetzung des Metallprodukts und wenigstens einer Eigenschaft eines zur Erwärmung eingesetzten Ofens (2) oder einer hierzu eingesetzten Heizung eine zeitliche Länge der Erwärmung ermittelt wird.

5. Verfahren nach einem der Ansprüche 1 bis 4, **dadurch gekennzeichnet, dass** anhand einer vorgegebenen Zieltemperaturverteilung des Metallprodukts, einer Oberflächentemperatur des Metallprodukts, einer chemischen Zusammensetzung des Metallprodukts, wenigstens einer Eigenschaft eines zur Erwärmung eingesetzten Ofens (2) oder einer hierzu eingesetzten Heizung und einerseits einer vorgegebenen Transportgeschwindigkeit des Metallprodukts oder andererseits einer vorgegebenen Liegezeit des Metallprodukts eine für die Erwärmung erforderliche Soll-Temperatur, mit der das Metallprodukt beaufschlagt wird, ermittelt wird.

6. System (1) zum Erwärmen eines gegossenen oder gewalzten Metallprodukts, aufweisend wenigstens einen Ofen (2) oder wenigstens eine Heizung, in den bzw. die das Metallprodukt zur Erwärmung einführbar ist, und wenigstens eine Steuer- und/oder Regeleinrichtung (3) zum Steuern und/oder Regeln der Erwärmung, **dadurch gekennzeichnet, dass** die Steuer- und/oder Regeleinrichtung (3) zur Durchführung des Verfahrens nach einem der Ansprüche 1 bis 5 eingerichtet ist.

## Claims

1. Method for control and/or regulation of heating of a cast or rolled metal product, comprising the steps:

   - determining the total enthalpy of the metal product from a sum of the free molar enthalpies, i.e. Gibbs energies, of all phases and/or phase components instantaneously present in the metal product;
   - determining a temperature distribution within the metal product by means of a dynamic temperature computation model with use of the determined total enthalpy; and
   - control and/or regulation of the heating of the metal product in dependence on at least one output variable of the temperature computation model,
   **characterised in that**
   a density is determined for each phase and phase boundaries between the phases are determined, wherein a density distribution of the metal product is determined on the basis of the determined densities of the phases and the determined phase boundaries and the density distribution is used in the determination of the temperature distribution.

2. Method according to claim 1, **characterised in that** a thermal conductivity is determined for each phase and the phase boundaries between the phases are determined, wherein a plot of the thermal conductivity of the metal product is determined on the basis of the determined thermal conductivities of the phases and the determined phase boundaries.

3. Method according to claim 1 or 2, **characterised in that** conversion temperatures at which in each instance a conversion from one phase to another phase is initiated are determined on the basis of the phase boundaries.

4. Method according to any one of claims 1 to 3, **characterised in that** a length of time of the heating is determined on the basis of a predetermined target temperature distribution within the metal product, a surface temperature of the metal product, a chemical composition of the metal product and at least one characteristic of a furnace (2) used for the heating or a heating means used for that purpose.

5. Method according to any one of claims 1 to 4, **characterised in that** a target temperature, which is required for the heating and by which the metal product is acted on, is determined on the basis of a predetermined target temperature distribution of the metal product, a surface temperature of the metal product, a chemical composition of the metal product, at least one characteristic of a furnace (2) used for the heating or a heating means used for that purpose and on the one hand a predetermined transport speed of the metal product or on the other hand a predetermined storage time of the metal product.

6. System (1) for heating a cast or rolled metal product, comprising at least one furnace (2) or at least one heating means, into which the metal product is introducible for heating, and at least one controlling and/or regulating device (3) for control and/or regulation of the heating, **characterised in that** the controlling and/or regulating device (3) is arranged for carrying out the method according to any one of claims 1 to 5.


**Revendications**

1. Procédé pour la commande et/ou le réglage d'un chauffage d'un produit métallique coulé ou laminé, qui présente les étapes dans lesquelles :

   - on détermine l'enthalpie globale du produit métallique à partir d'une somme des enthalpies molaires libres, c'est-à-dire des énergies de Gibbs, de toutes les phases et/ou de toutes les fractions de phases momentanément présentes dans le produit métallique ;
   - on détermine une distribution de la température au sein du produit métallique au moyen d'un modèle de calcul dynamique de la température en utilisant l'enthalpie globale qui a été déterminée ; et
   - on commande et/ou on règle le chauffage du produit métallique en fonction d'au moins une valeur de départ du modèle de calcul de la température ;
   **caractérisé en ce que** l'on détermine, en fonction de chaque phase, une masse volumique et on détermine des interfaces entre les phases ; dans lequel on détermine une distribution de la masse volumique du produit métallique sur la base des masses volumiques des phases que l'on a déterminées et des interfaces que l'on a déterminées, et l'on utilise la distribution des masses volumiques au cours de la détermination de la distribution de la température.

2. Procédé selon la revendication 1, **caractérisé en ce que**, pour chaque phase, on détermine une conductibilité thermique, et **en ce que** l'on détermine des interfaces entre les phases ; dans lequel on détermine une allure de la conductibilité thermique du produit métallique sur la base des conductibilités thermiques des phases que l'on a déterminées et des interfaces que l'on a déterminées.

3. Procédé selon la revendication 1 ou 2, **caractérisé en ce que**, l'on détermine des températures de transition sur la base des interfaces, auxquelles respectivement une transition est introduite d'une phase dans une autre phase.

4. Procédé selon l'une quelconque des revendications 1 à 3, **caractérisé en ce que** l'on détermine, sur la base d'une distribution prédéfinie de températures cibles au sein du produit métallique, d'une température superficielle du produit métallique, d'une composition chimique du produit métallique et d'au moins une propriété d'un four (2) mis en oeuvre pour le chauffage ou d'un chauffage mis en œuvre à cet effet, un laps de temps pour le chauffage.

5. Procédé selon l'une quelconque des revendications 1 à 4, **caractérisé en ce que**, par référence à une distribution prédéfinie de températures cibles au sein du produit métallique, à une température superficielle du produit métallique, à une composition chimique du produit métallique, à au moins une propriété d'un four (2) mis en œuvre pour le chauffage ou à un chauffage mis en oeuvre à cet effet, et d'une part à une vitesse de transport prédéfini du produit métallique ou d'autre part à un temps d'immobilisation prédéfini du produit métallique, une température de consigne requise pour le chauffage avec laquelle on sollicite le produit métallique.

6. Système (1) qui est destiné au chauffage d'un produit métallique coulé ou laminé, qui présente au moins un four (2) ou au moins un chauffage, dans lequel on peut introduire le produit métallique à des fins de chauffage, et au moins un mécanisme de commande et/ou de réglage (3) qui est destiné à la commande et/ou au réglage du chauffage, **caractérisé en ce que** le mécanisme de commande et/ou de chauffage (3) est conçu pour la mise en œuvre du procédé selon l'une quelconque des revendications 1 à 5.

FIG.1

## Phasenanteile beim LowCarbon

FIG.2

Enthalpy

FIG.3

PhaseFrac

| | |
|---|---|
| —— | Liquid |
| ——— | Ferrite |
| ——— | Austenite |
| —·—— | Cementite |

FIG.4

Source: calculated (Gibbs)
Werkstoff Low-Carbon

Analysis (%):
C=0.060  Si=0,020  Mn=0,310  P=0,018  S=0,007  Cu=0,000
Cr=0,020  Ni=0,020  Al=0,027  Mo=0,000  Ti=0,000
V=0,000  Nb=0,000  W==,000

**Density**

Analysis [%]

Source: calculated
Werkstoff Low-Carbon

C=0,060  Si=0,020  Mn=0,310  P=0,018
S= 0,007  Cu= 0,000  Cr=0,020
Ni= 0,020  Al=0,027  Mo=0,000
Ti=0,000  V=0,000  Nb=0,000  W=0,000

FIG.5

**Heat Conductivity**

Heat Con. at T Liquidus=39,8 W/m/K
Heat Con. at T Solidus = 34,8 W/m/K

Analysis [%]

Source: calculated
Werkstoff Low-Carbon
C=0,060  Si=0,020  Mn=0,310  P=0,018
S= 0,007  Cu= 0,000  Cr=0,020
Ni= 0,020  Al=0,027  Mo=0,000
Ti=0,000  V=0,000  Nb=0,000  W=0,000

FIG.6

## PhaseFrac

PhaseFrac %

100
90
80
70
60
50
40
30
20
10
0

1600 1500 1400 1300 1200 1100 1000 900 800 700 600 500 400 300 200 100 0

Liquid

Mushy

T Liquidus= 1435°C

T Gamma = 1289°C

Gamma

Temperature [C°]

Analysis [%]

Source: calculated
Werkstoff Stainless

C= 0,500   Si= 0,030   Mn= 0,500   P= 0,015
S= 0,008   Cu= 0,100   Cr= 12,12
Ni= 12,10   Al= 0,050   Mo= 0,010   Ti= 0,002
V= 0,004   Nb= 0,002   W= 0,000

Liquid

Mushy

Gamma

FIG.7

**Density**

Analysis [%]

Source: calculated
Werkstoff Stainless

C= 0,500  Si= 0,030  Mn= 0,500  P= 0,015
S= 0,008  Cu= 0,100  Cr= 12,12
Ni= 12,10  Al= 0,050  Mo= 0,010  Ti= 0,002
V= 0,004  Nb= 0,002  W= 0,000

FIG.8

## Heat Conductivity

Heat Con. at T Liquidus = 36,0 W/m/K
Heat Con. at T Solidus = 31,5 W/m/K

T Solidus = 1289 °C
T Liquidus = 1435 °C

Heat Conductivity [W/m/K]

Temperature [C°]

Analysis [%]

Source: calculated
Werkstoff Stainless

C= 0,500  Si= 0,030  Mn= 0,500  P= 0,015
S= 0,008  Cu= 0,100  Cr= 12,12
Ni= 12,10  Al= 0,050  Mo= 0,010  Ti= 0,002
V= 0,004  Nb= 0,002  W= 0,000

FIG.9

**FIG.10**

**FIG.11**

FIG.12

Ofenlänge

FIG.13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012224502 A1
- DE 102011082158 A1

**In der Beschreibung aufgeführte Nicht-Patentliteratur**

- Metallurgie des Stranggießens. Verlag Stahleisen mbH, 1992
- e wichtigsten physikalischen Eigenschaften von 52 Eisenwerkstoffen. Verlag Stahleisen Düsseldorf, 1973